Europäisches Patentamt

(19) European Patent Office

Office européen des brevets

(11) Publication number: **0 304 428 B1**

# EUROPEAN PATENT SPECIFICATION

(12)

(45) Date of publication of patent specification:
**31.07.91 Bulletin 91/31**

(51) Int. Cl.⁵: **A01G 23/08**

(21) Application number: **87903323.1**

(22) Date of filing: **13.05.87**

(86) International application number:
**PCT/FI87/00064**

(87) International publication number:
**WO 87/06794 19.11.87 Gazette 87/25**

(54) **A JIB-MOUNTED SUSPENSION DEVICE FOR A TIMBER HARVESTER.**

(30) Priority: **13.05.86 FI 861985**
**10.02.87 FI 870530**

(43) Date of publication of application:
**01.03.89 Bulletin 89/09**

(45) Publication of the grant of the patent:
**31.07.91 Bulletin 91/31**

(84) Designated Contracting States:
**AT BE CH DE FR GB IT LI LU NL SE**

(56) References cited:
**EP-A- 96 146**
**EP-A- 154 615**
**FI-B- 60 805**
**FR-A-25 604 93**

(56) References cited:
**SE-A-81 016 057**
**SE-A-82 044 272**
**SE-A-83 020 487**
**US-A- 4 491 163**
**US-A- 4 537 236**

(73) Proprietor: **KETONEN, Lauri Kalervo**
**Huvilakatu 15**
**SF-64120 Kristiinankaupunki (FI)**

(72) Inventor: **KETONEN, Lauri Kalervo**
**Huvilakatu 15**
**SF-64120 Kristiinankaupunki (FI)**

(74) Representative: **Enskat, Michael Antony Frank et al**
**Saunders & Dolleymore 9, Rickmansworth Road**
**Watford Hertfordshire WD1 7HE (GB)**

## Description

The present invention relates to timber harvesters.

US Patent Specification No 4 537 236 describes a timber harvester suspended from the upper end of the jib by means of the upper joint. The harvester includes a turning motor to turn the harvester about a vertical axis of the harvester and a hydraulic cylinder, to turn the main frame of the harvester to a desired vertical or horizontal position. The turning motor is connected between the harvester and the jib.

Timber harvesters, which carry out all stages of the work except felling, are called timber processors. Nowadays most of them can be equipped with a so-called felling head. The purpose of this felling-head is to bring the processor to a vertical position. The vertical position is required in order to take hold of the tree. In practice it is sufficient if the processor is even roughly in a vertical position so that the tree can be taken hold of. Felling sawing is carried out by the cutting saw of the processor.

When the harvester is hanging freely it naturally tends to take a horizontal position ; ie the centre of gravity in the middle of the machine tends downwards. By means of the cylinder in the suspension device, the harvester is turned in the direction of the suspension device by pushing the frame of the suspension device towards the stripping blades and the harvester now moves into a nearly vertical position, for the centre of gravity tries to move under the upper joint.

After the felling stage, the stripping and cutting of the tree takes place with the tree in a horizontal position. The harvester hangs freely from its felling head and in addition a so-called grab turner is located on the felling head. The harvester is directed round its vertical shaft by this turner. Really this felling is a suspension device, by which the harvester is made to rise to a vertical position advantageously by means of a hydraulic cylinder.

The problem with these felling heads or suspension devices is their great weight, great length, and also price. These problems are due to the fact that ordinary grab turners are used in these suspension devices. Because the diameter of the grab turner is large, the turner must be located at the extreme top of the suspension device and further the turner should be in the felling position above the harvester. This is so that the harvester is able to turn sufficiently vertically. But now the length of the suspension device becomes great because the turner must be entirely situated in front of the stripping blades of the harvester.

It is an object of the invention to provide an improved timber harvester.

According to the present invention there is provided a timber harvester arranged to be pivotally suspended from a jib, the harvester comprising an elongate main frame supporting cutters and tree engaging rollers, a sub frame pivotally connected to the main frame, a piston and cylinder arrangement for displacing said main frame relative to said sub frame between a position in which the longitudinal axis of the main frame extends substantially vertically and a position in which said longitudinal axis of the main frame extends substantially horizontally and rotation means between said sub frame and said jib to rotate said harvester about a vertical axis characterised in that said rotation means comprises universal joint means for connection to said jib, a sleeve and a shaft for interconnecting said universal joint means to said sub frame, and a drive for effecting relative rotation between said sleeve and said shaft, said shaft engaging said sleeve and being constrained for relative rotary movement, and against relative axial movement, the common axis of said sleeve and said shaft extending at an angle to intersect the longitudinal axis of said main frame when vertical, at a location ajacent the upper extremity of the main frame whereby said jib can be located close to said upper extremity when said main frame extends vertically.

The timber harvester to be described achieves a short length while allowing, nevertheless, a sufficient vertical rise. In addition the harvester to be described is relatively light and easy to construct.

Even in the stage where the harvester is taking hold of the tree the jib of the crane can push the harvester against the trunk without the harvester in the vertical position trying too much to move away from the lower part of the tree as happened with earlier suspension devices. In a suspension device to be described the upper joint is located during the felling stage close to the upper stripping blade. Thus a turning moment creating a horizontal pushing movement away in the lower part of the harvester is nonexistent. Further, by placing the cylinder that tilts the suspension device in the centre of the device it is possible to minimize the length of the stroke of the cylinder. By selecting suitable securing points for the cylinder when the suspension device at one stage tilts towards the cutting saw the piston rod of the cylinder begins once again to push out of the cylinder. This kind of situation appears for example when the tree being stripped is prevented from moving backwards when the feeding device begins to drive the entire harvester forwards ie in the direction of the stripping blades. Because when the harvester is hanging freely it tends towards a horizontal position it is sufficient when, starting from this horizontal position the cylinder is able to develop even a small amount of the moment required to make the harvester rise to the vertical.

A timber harvester embodying the present invention will now be described with reference to the accompanying diagrammatic drawings in which :

Figure 1 shows the harvester taking told of a standing tree ;

Figure 2 shows the harvester during the stripping and cutting stage of work; and

Figure 3 shows a cross-section of a suspension device of the harvester along the line II-II shown in Figure 2.

Securing lugs attached to a main frame 1 of the harvester, support two pins 4 and 5. The pin 4 couples a sub frame 6 of the harvester to the frame 1 in such a way that the sub frame 6 is able to turn through an angle of about 140° around the pin 4. The turning movement can be controlled by a cylinder 7. The cylinder 7 is attached to the frame 1 by the pin 5 and to the sub frame 6 by a pin 8. The attachment of the cylinder 7 thus permits the sub frame 6 to turn past the shortest position ie the lower dead centre of the cylinder 7.

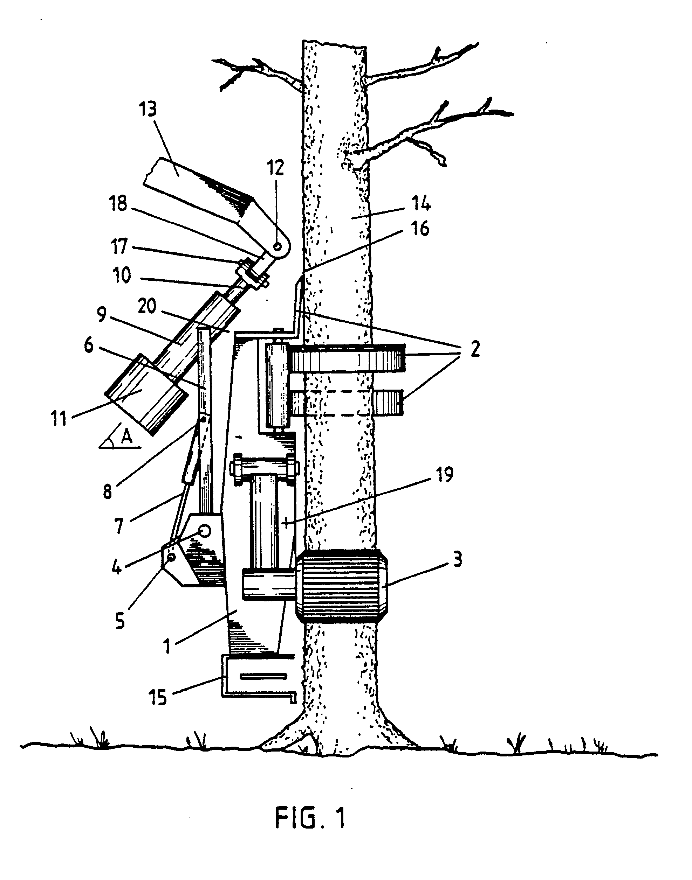

A tube or sleeve 9 is secured to the sub frame 6. Inside the tube 9 is a shaft 10, which is secured by bearing axially and radially to the tube 9. The shaft 10 is secured by a pin 17 to a cross-piece 18. The cross-piece 18 is further secured by a pin 12 in the crane jib 13. The cross-piece 18, and the pins 12 and 17 permit the frame 1 of the harvester to hang freely independently of the mutual position of the frame 1 and the sub frame 6. A turning motor 11 is secured to the tube 9. A second possibility would be to attach the motor to the sub frame of the suspension device. A cutting and felling saw 15, a pair of feeder rollers 3 and three stripping blades 2 are all secured to the frame 1. In Figure 1 any sawing action to fell a tree 14 to be felled has not yet been carried out. The centre of gravity of the harvester is located at a point 19, Figure 1.

In operation the piston rod of the cylinder 7 is pushed out when the sub frame 6 is close to the frame 1. At the same time the tube 9 guides the front edge of the frame 1 at the point 10. It should be noted that the straight line between the pins 4 and 12 does not go through the centre of gravity 19, but that the centre of gravity 19 remains closer to the tree 14. It should also be noted that the angle A, between the shaft 10 and the horizontal level, is significantly smaller than 90°. Up till now in previous suspension devices this corresponding angle is close to 90°. By locating the turning motor 11 in a slanting position on the suspension device is possible to locate the cylinder 7 partly parallel to the turning motor 11, which reduces the overall length of the suspension device.

In Figure 1 point 20, in which the tube 9 and the frame 1 meet, is marked. But now the tube 9 can be made considerably thinner than the turning motor 11. By placing the shaft 10 and at the same time, the thin tube 9, at an angle (angle A), the securing point 12 can have a very advantageous position. As can be seen the pin 12 is located only a little above the upper extremity 16 of the cutter 2 on the main frame 1. The significance of point 16 is emphasized when the jib 13 pushes the harvester in the felling position against the tree. Only an insignificant turning moment between the pin 12 and the point 16 moving the lower part of the harvester away from the tree arises.

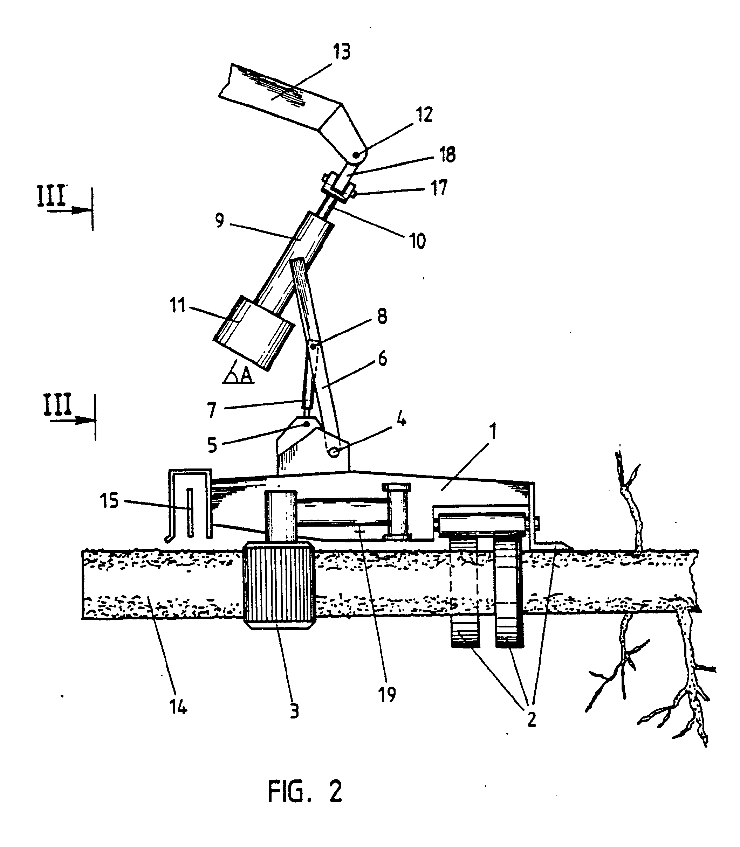

In the stripping and cutting position in Figure 2 the harvester hangs freely from the pin 12, when the pin 12 and the pin 4 are more or less in the same vertical line. Without the tree the centre of gravity 19 would be more or less in the line joining the pins 12 and 4.

The size of the angle A between the shaft 10 and the horizontal can be reduced to even 45°. It would then be advantageous that the shaft 10 would be suspended from the jib 13 by a constant angular velocity joint. This is because when the turning motor 11 turns the harvester, the moment requirement varies unreasonably when using a normal universal ie a cardan joint, especially if the pins 17 and 12 cannot for structural reasons be brought close together in the direction of the shaft 10.

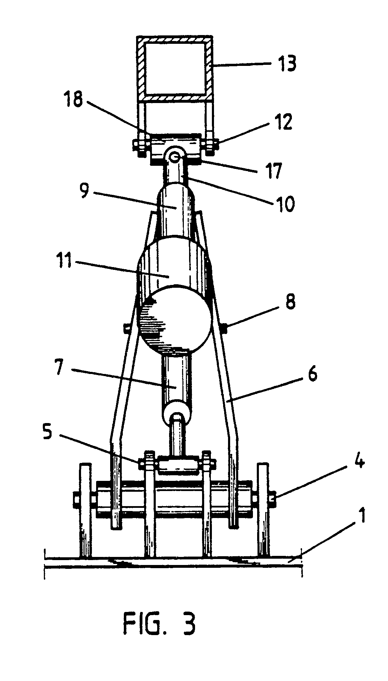

In Figure 3 the securing point of the cylinder 7 in relation to the frame 1 is seen. Because the pin 5 is shorter than the inside dimension of the frame 6 the frame 6 is able to turn past the pin 5. When the pin 5 is passed the pins 8, 5, and 4 are in the same straight line. At this stage the piston rod of the cylinder begins to push out again and the frame 6 still turns around the pin 4 towards the saw 15. Thus it is possible to have a very short length of stroke in the cylinder 7. In the position in Figure 2 the passing situation has not yet taken place.

## Claims

1. A timber harvester arranged to be pivotally suspended from a jib (13), the harvester comprising
an elongate main frame (1) supporting cutters (22) and tree engaging rollers (3),
a sub frame (6) pivotally connected to the main frame (1), a piston and
cylinder arrangement (7) for displacing said main frame (1) relative to said sub frame (6) between a position in which the longitudinal axis of the main frame (1) extends substantially vertically and a position in which said longitudinal axis of the main frame (1) extends substantially horizontally and
rotation means between said sub frame (6) and said jib (13) to rotate said harvester about a vertical axis characterised in that said rotation means comprises univeral joint means (12, 17) for connection to said jib (13), a sleeve (9) and a shaft (10) for interconnecting said univeral joint means (17,12) to said sub frame (6), and a drive (11) for effecting relative rotation between said sleeve (9) and said shaft (10), said shaft (10) engaging said sleeve and being constrained for relative rotary movement, and against relative axial movement, the common axis of said sleeve (9) and said shaft (10) extending at an angle to intersect the longitudinal axis of said main frame (1), when vertical, at a location adjacent the upper extremity (16) of the main frame (1) whereby said jib (13) can be located close to said upper extremity (16) when said main frame (1) extends vertically.

2. A timber harvester according to Claim 1 characterised in that when the main frame (1) is moved from a vertical to a horizontal position, the pivotal axis (4) between the sub frame (6) and the main frame (1) moves from a position spaced from a line intersecting the pivotal axis (12) of the harvester on the jib (13) and the centre of gravity of the harvester, to a location substantially coincident with said line whereby to subject said shaft and sleeve to an axial load and substantially no radial load.

3. A timber harvester according to Claim 1 or Claim 2 characterised by an axial bearing interconnecting said sleeve and said shaft, said axial bearing being located below the point at which said sub frame is coupled to said sleeve and said shaft.

4. A timber harvester according to Claim 3 characterised in that said axial bearing is separated from said drive (11).

5. A timber harvester according to any preceding claim characterised in that said univeral joint is a constant angular velocity type.

## Patentansprüche

1. Baumernter, der an einem Ausleger (13) schwenkbar bzw. drehbar aufgehängt ist, mit
einem langgestreckten Hauptrahmen (1), der Schneideinrichtungen (2) und drei Zuführrollen bzw. -walzen (3) trägt,
einem mit dem Hauptrahmen (1) schwenkbar verbundenen Nebenrahmen (6),
einer Hubzylinderanordnung (7) zur Verstellung des Hauptrahmens (1) in Bezug auf den Nebenrahmen (6) zwischen einer Position, in der die Längsachse des Hauptrahmens (1) im wesentlichen vertikal verläuft, und einer Position, in der die Längsachse des Hauptrahmens (1) im wesentlichen horizontal verläuft und,
Rotationsmittel zwischen dem Nebenrahmen (6) und dem Ausleger (13), um den Baumernter um eine Vertikalachse zu drehen bzw. zu schwenken, dadurch gekennzeichnet, daß das Rotationsmittel ein Universal-Verbindungsmittel (12, 17) zur Befestigung des Auslegers (13), eine Buchse bzw. Hülse (9) und eine Welle (10) zur Verbindung der Universal-Verbindungsmittel (12, 17) am Nebenrahmen (6) und einen Antrieb (11) zur Bewirkung einer relativen Drehung zwischen der Buchse (9) und der Welle (10) umfaßt, wobei die Welle (10) mit der Buchse in Eingriff steht und eingeschränkt ist für eine relative Drehbewegung, und eingeschränkt ist gegen eine relative Axialbewegung, wobei sich die gemeinsame Achse der Buchse (9) und der Welle (10) unter einem die Längsachse des Hauptrahmens (1) schneidenden Winkel erstreckt, und zwar bei vertikaler Anordnung, an einer zum oberen Ende (16) des Hauptrahmens (1) benachbarten Stelle, und wobei der Ausleger (13) dem oberen Ende (16) benachbart angeordnet werden kann, wenn der Rahmen (1) vertikal verläuft.

2. Baumernter nach Anspruch 1, dadurch gekennzeichnet, daß wenn der Hauptrahmen (1) aus einer vertikalen in eine horizontale Position verstellt wird, sich die Schwenk-/Drehachse (4) zwischen dem Nebenrahmen (6) und dem Hauptrahmen (1) von einer Position, die entfernt ist von einer Linie, die die Schwenk-bzw. Drehachse (12) des am Ausleger (13) angeordneten Baumernters und dessen Schwerpunkt schneidet, in eine im wesentlichen mit dieser Linie koinzidente Position verstellt, wobei die Welle und die Buchse einer Axialbelastung und im wesentlichen keiner Radialbelastung ausgesetzt ist.

3. Baumernter nach Anspruch 1 oder 2, gekennzeichnet durch ein die Buchse und die Welle miteinander verbindendes Axiallager, das unterhalb des Punktes angeordnet ist, an dem der Nebenrahmen mit der Buchse und der Welle verbunden ist.

4. Baumernter nach Anspruch 3, dadurch gekennzeichnet, daß das Axiallager vom Antrieb (11) getrennt bzw. separiert ist.

5. Baumernter nach einem der vorhergehenden Ansprüche, dadurch gekennzeichnet, daß das Universal-Verbindungsmittel von mit konstanter Winkelgeschwindigkeit arbeitender Art ist.

## Revendications

1. Machine à cueillir aux arbres montée suspendue de façon pivotante ou basculante à une flèche (13), ladite machine à cueillir comprenant :
• un châssis principal allongé (1), portant des couteaux (2) et des rouleaux (3) d'appui ou de prise sur l'arbre,
• un châssis secondaire adjacent (6) relié de façon pivotante au châssis principal (1),
• un ensemble de piston-cylindre (7) pour déplacer le châssis principal (1) par rapport au châssis secondaire adjacent (6) entre une position dans laquelle l'axe longitudinal du châssis principal (1) s'étend essentiellement verticalement et une position dans laquelle l'axe longitudinal du châssis principal (1) s'étend essentiellement horizontalement,
• des moyens de pivotement entre le châssis secondaire (6) et la flèche (13) pour permettre le pivotement de la machine à cueillir autour d'un axe vertical, caractérisée en ce que lesdits moyens de pivotement se composent de moyens d'articulation universelle (12, 17) pour connecter sur ladite flèche (13) une chemise (9) et un arbre (10) pour relier entre eux les moyens d'articulation universelle (12, 17) au châssis secondaire (6), et un entraînement (11) pour réaliser le pivotement entre la chemise (9) et l'arbre (10), ledit arbre (10) venant en prise dans cette chemise et y étant contraint en mouvement relatif de pivotement limité par un mouvement relatif axial contraire, l'axe commun de la chemise (9) et de l'arbre (10) s'étendant selon un angle tel qu'il coupe l'axe longitudinal du châssis principal (1) lorsqu'il est vertical à un endroit proche de l'extrémité supérieure (16) du châssis principal (1) permettant à la flèche (13) d'être disposée au voisinage de ladite extrémité supérieure (16) lorsque le châssis principal (1) supérieure (16) lorsque le châssis principal (1) s'étend verticalement.

2. Machine à cueillir selon la revendication 1, caractérisée en ce que lorsque le châssis principal (1) passe d'une position verticale dans une position horizontale, l'axe de pivotement (4) entre le châssis secondaire adjacent (6) et le châssis principal (1) se déplace d'une position distincte d'une ligne coupant l'axe (12) de pivotement de la flèche (13) de la machine à cueillir dans une position qui coïncide essentiellement avec ladite ligne, permettant à l'arbre et à la chemise de n'être soumis qu'à une charge axiale et essentiellement à aucune charge radiale.

3. Machine à cueillir selon la revendication 1 ou 2, caractérisée par un palier axial reliant la chemise et l'arbre entre eux, palier axial situé en-dessous du point de liaison du châssis adjacent à la chemise et à l'arbre.

4. Machine à cueillir selon la revendication 3, caractérisée an ce que ledit palier axial est séparé dudit moyen d'entraînement (11).

5. Machine à cueillir selon l'une quelconque des revendications précédentes, caractérisée en ce que l'articulation universelle est du type homocinétique à angle constant.

FIG. 1

FIG. 2

FIG. 3